Europäisches Patentamt

European Patent Office

Office européen des brevets

(19)

(11) Publication number: **0 137 730**
**A2**

(12) # EUROPEAN PATENT APPLICATION

(21) Application number: **84306158.1**

(22) Date of filing: **10.09.84**

(51) Int. Cl.⁴: **G 06 F 15/332**

(30) Priority: **10.09.83 JP 166861/83**

(43) Date of publication of application:
**17.04.85 Bulletin 85/16**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Kohata, Minoru**
**3-9-1013, Nishiki-cho 1-chome**
**Sendai-shi Miyagi 980(JP)**

(72) Inventor: **Sone, Hideaki**
**29-20, Asahigaoka 1-chome**
**Sendai-shi Miyagi 980(JP)**

(72) Inventor: **Hamada, Takashi**
**Kopo-M 202, 29-20 Sakuragi-cho**
**Sendai-shi Miyagi 980(JP)**

(72) Inventor: **Takagi, Tasuku**
**2-20, Nakayama 5-chome**
**Sendai-Shi Miyagi 980(JP)**

(72) Inventor: **Hara, Toshito**
**Rune Higashirinkan E 108 5-6 Kamitsuruma**
**Sagamihara-shi Kanagawa 228(JP)**

(72) Inventor: **Wakatsuki, Noboru**
**Nakanoshima-jutaku 3-402 1540-1, Nakanoshima**
**Tama-ku Kawasaki-shi Kanagawa 214(JP)**

(74) Representative: **Sunderland, James Harry et al,**
**HASELTINE LAKE & CO Hazlitt House 28 Southampton**
**Buildings Chancery Lane**
**London WC2A 1AT(GB)**

(54) Discrete fourier transformation method and apparatus for carrying out the same.

(57) A discrete Fourier transformation apparatus is provided with a circuit for effecting discrete transformation of a square wave ( ② ) and an input signal ( ① ) by a digital process, and a digital filter arranged after the circuit. Discrete Fourier transformation components are obtained as an amplitude and a phase of a sine wave ( ④ ) which is output from the digital filter without using a digital multiplier.

./...

EP 0 137 730 A2

Fig. I

① SPECTRUM — $X_K$ — $k\omega$ — FREQ.
DFT OF INPUT WAVEFORM X(n)

② SPECTRUM — $k\omega$  $3k\omega$  $5k\omega$  $7k\omega$ — FREQ.
DFT OF SQUARE WAVEFORM h(kwt)

CONVOLUTION

③ SPECTRUM — $X_K$ — $k\omega$  $3k\omega$  $5k\omega$  $7k\omega$ — FREQ.
DFT OF CONVOLUTED WAVEFORM

ADJUSTMENT OF CONVOLUTION PERIOD
(PERIOD OF CONVOLUTION = $2\pi/w$)

④ SPECTRUM — $X_K$ — $\omega$  $3\omega$  $5\omega$  $7\omega$ — FREQ.
DFT OF WAVEFORM AFTER PERIOD IS ADJUSTED

0137730

## DISCRETE FOURIER TRANSFORMATION METHOD AND
## APPARATUS FOR CARRYING OUT THE SAME

The present invention relates to a discrete Fourier transformation method and apparatus for the same.

Conventional methods for rapidly carrying out Fourier conversion include Fast Fourier Transformation (FFT) and the Winograd algorithm.

While these methods feature less multiplication than with direct execution of discrete Fourier transformation, they still require a multiplication process per se. The hardware for effecting these methods, therefore, must include a multiplier, both increasing the size and cost of the equipment.

An embodiment of the present invention can provide a method for discrete Fourier transformation in real time using only addition and subtraction and no multiplication and thus realizable by apparatus which is simple, small in size, and inexpensive.

The present invention takes note of the fact that a square wave is expressed by just two values [0, 1]. It executes discrete convolution of a square wave and an input signal by difference calculation, that is, by 2.5N addition and subtraction calculations (where N represents the number of samplings of the discrete input signal). The third and higher odd-numbered harmonics included in the waveform obtained above are removed by a comb filter or other digital filter so as to obtain a sine wave. The discrete Fourier transformation of the input signal is obtained from data on the amplitude and the phase of the above-mentined sine wave. To realize the above, the present invention provides a discrete Fourier transformation apparatus including a circuit for effecting discrete transformation of a square wave and an input signal by a digital process and a digital filter arranged after the circuit and for obtaining a discrete Fourier component as an amplitude and a phase of a sine wave output from the digital comb filter.

Reference is made, by way of example, to the accompanying drawings, in which:

Fig. 1 is a diagram explaining discrete convolution of an input signal and square wave;

Fig. 2 is a diagram of the relationship between a discrete Fourier transformation component and an output sine wave;

Fig. 3 is a diagram of one example of a matrix $H_k$;

Fig. 4 is a diagram of one example of a difference conversion matrix $\Delta H_k$;

Fig. 5 is a diagram of the construction of an embodiment of the present invention;

Fig. 6A is a diagram of the construction of an example of a digital filter shown in Fig. 5;

Fig. 6B is a diagram of a characteristic of the filter shown in Fig 6A;

Fig. 6C is a diagram of the relationship between an order m of the digital filter and an error of the discrete Fourier transformation apparatus according to the present invention;

Fig. 7 is a diagram of a characteristic of another example of the digital filter shown in Fig. 5; and

Fig. 8 is a diagram of a parallel-type embodiment of the present invention.

(sampled at N points)

An input signal discreted at a point N/is expressed as [x(0), x(1), ..... x(N-1)]. Vectorized, this becomes

$$\not{x} = [x(0), x(1), ..... x(N-1)]^T.$$

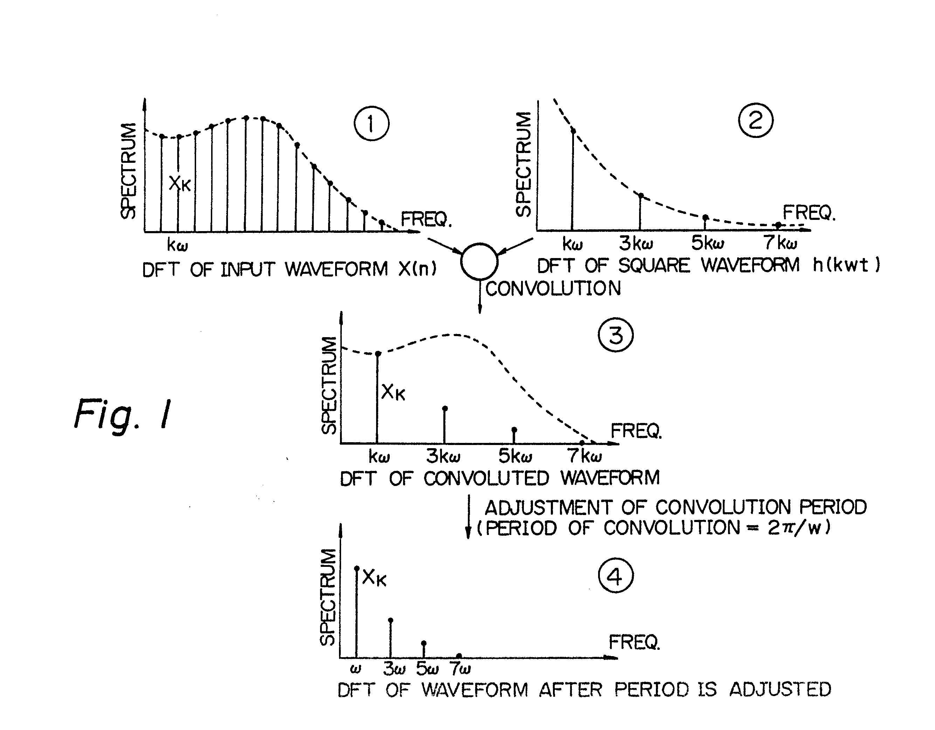

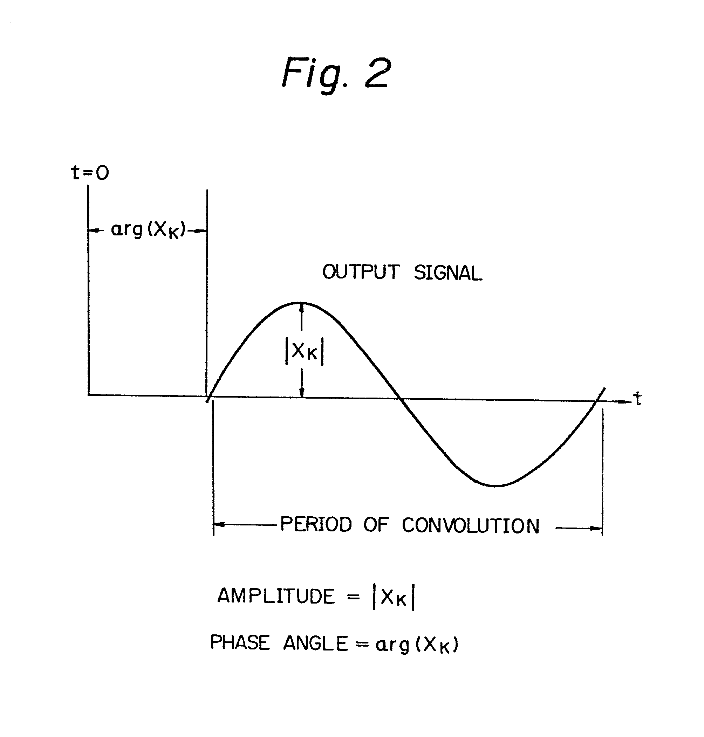

The discrete Fourier transformation (DFT) of $\not{x}$ is for example, as shown in Fig. 1-①. On the other hand, a square wave having a basic angular frequency $K\omega (0 \leq k \leq N-1)$ has a DFT as shown in Fig. 1-②. The waveform obtained from the result of the discrete convolution of these waveforms has a DFT as shown in Fig. 1-③. When the period of the convolution is adjusted, the DFT as shown in Fig. 1-④ is obtained. After this step, the basic frequency component of angular frequency $\omega$ in Fig. 1-④ is the DFT of the input signal, that is, the Kth DFT component $X_k$ in Fig. 1-①. In Fig. 1-④, the odd order higher harmonic components $3\omega$, $5\omega$, ..... appearing in Fig. 1-④ are removed by using a digital filter such formed by as /several comb filters/in cascade and a sine wave having an angular frequency $\omega$ is obtained. As shown in Fig. 2, the amplitude of the sine wave corresponds to $|X_k|$, and the phase angle thereof corresponds to arg $(X_k)$.

The above-mentioned discrete convolution can be executed over one period of the sine wave, that is, the section/$2\pi/k\omega$. (period) This can be carried out by multiplying $\not{x}$ with a matrix $H_k$ (representing a square wave) shown in equation(1).

$$H,k = \left[ H|_0 , H|k\cdot, H|2k\cdot, H|3k\cdot, ....., H|_{(N-1)k}\cdot \right]$$

$$... (1)$$

wherein

$$H|_0 = \left[ h_0 , h_1 , ..... h_{N/2-1} , h_{N/2} , h_{N/2+1} , ......, h_{N-1} \right]^T$$

$$= \left[ 1, 1, ..... 1, 0, 0, ......, 0 \right]^T$$

and $H|j\cdot (k \leq j \leq (N-1)k)$ is obtained by successively shifting the elements in $H|_0$ toward the right by $j$ mod N, $H|_0$ and $H|j$ each becoming a row vector in $H_k$. The waveform formed by the sampled values at point N, obtained from the results of the discrete convolution,

is expressed as $\left[W_k(0), W_k(1), \ldots W_k(N-1)\right]$. This is vectorized and expressed as $W|k$ in equation (2).

$$W|k = H_k \not{x} \qquad \ldots (2)$$

wherein

$$W|k = \left[W_k(0), W_k(1), \ldots, W_k(N-1)\right]^T$$

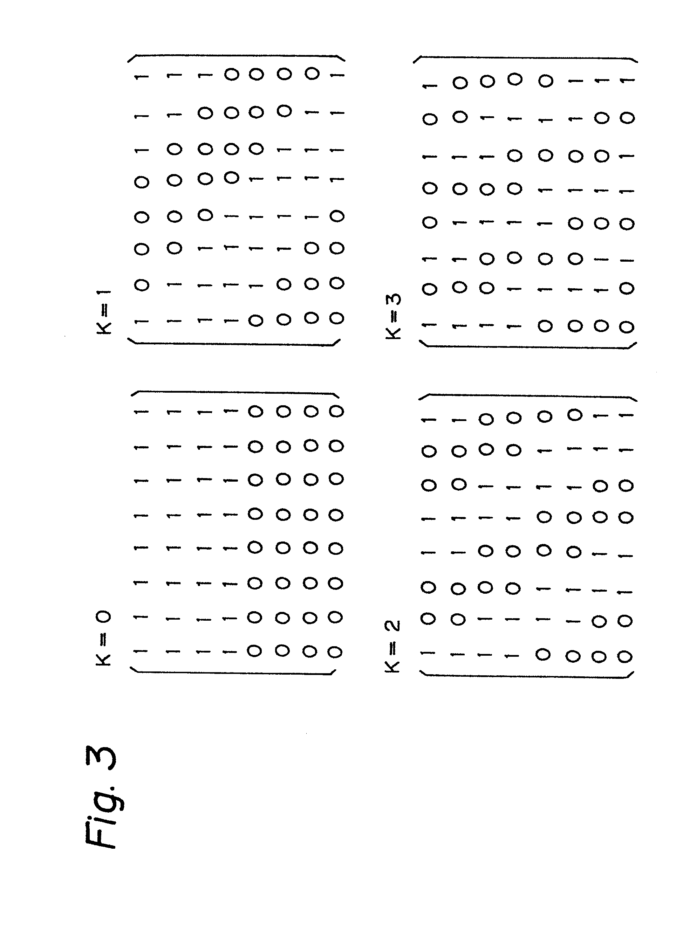

One example of $H_k$ is shown in Fig. 3 in the case where $N = 8$, $k = 0, 1, 2, 3$. In the matrix $H_k$, $N^2/2$ elements are "1" and the remaining $N^2/2$ elements are "0", therefore, equation (2) can be executed by $N^2/2$ additions. This number of additions can be decreased by the following method.

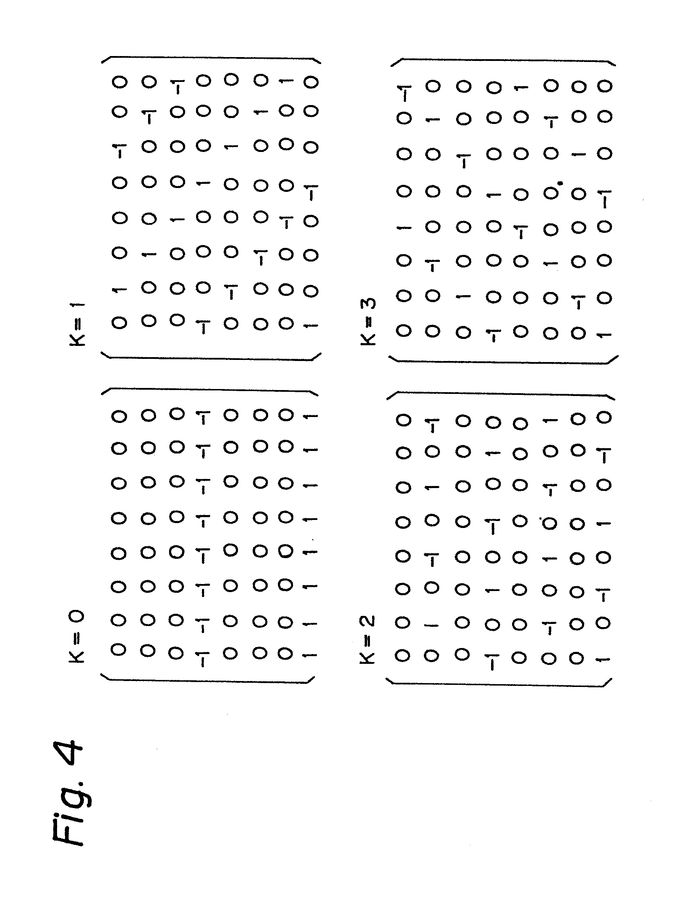

In the matrix $H_k$, the difference between elements of the i row and i - 1 row is found. A matrix $\Delta H_k$ having this as the i row elements/(i-th row element)$\not{x}$ is defined as in equation (3) $(0 \leq i \leq N-1)$. This matrix is called a difference conversion matrix. An example of $\Delta H_k$ is shown in Fig. 4, in the case where $N = 8$ and $k = 0, 1, 2, 3$.

$$\Delta H_k(i, j) = H_k(i, j) - H_k(i-1, j)$$
when $i = 0$ $\qquad \ldots (3)$
$$\Delta H_k(0, j) = H_k(0, j) - H_k(N-1, j)$$

In equation (3), it is assumed that the suffixes i, j, which denote the matrix, start from 0 and end at N-1. The signal shown by equation (4) is obtained by multiplying the matrix $\Delta H_k$ and $\not{x}$. This signal is expressed as $\left[\Delta W_k(0), \Delta W_k(1), \ldots \Delta W_k(n-1)\right]$ as shown at the right side of equation (4).

$$\Delta H_k \not{x} = \begin{bmatrix} W_k(0) - W_k(N-1) \\ W_k(1) - W_k(0) \\ W_k(2) - W_k(1) \\ \vdots \\ \vdots \\ \vdots \\ W_k(N-1) - W_k(N-2) \end{bmatrix} = \begin{bmatrix} \Delta W_k(0) \\ \Delta W_k(1) \\ \Delta W_k(2) \\ \vdots \\ \vdots \\ \vdots \\ \Delta W_k(N-1) \end{bmatrix} \qquad \ldots (4)$$

In equation (4), when $W_k(N-1)$ is known, $W_k(0)$ is obtained from the following equation.

$$W_k(N-1) + \Delta W_k(0) = W_k(0) \qquad \ldots (5)$$

Further, when $W_k(0)$ is known, $W_k(1)$ is obtained from the following equation.

$$W_k(0) + \Delta W_k(1) = W_k(1) \qquad \qquad \ldots (6)$$

That is, when $\Delta W_k(n)$ $(0 \le n \le N-1)$ is added to $W_k(N-1)$ successively, $W_k(0)$, $W_k(1)$, ..... are obtained successively. $W_k(N-1)$, which is known at the beginning, can be obtained by calculating equation (2) with respect to only the $(N-1)$'th column of $H_k$. This requires N/2 additions. Further, when $\Delta W_k(n)$ is obtained from equation (4), 2N additions and subtractions are required. This is because, in $\Delta H_k$, 2N elements are "1" or "-1" and the other elements are "0". Thus, the discrete convolution of the square wave and the input signal can be executed by a total of 2.5N additions and subtractions, so that the number of calculations can be considerably decreased from the $N^2/2$ times required for directly executing equation (2).

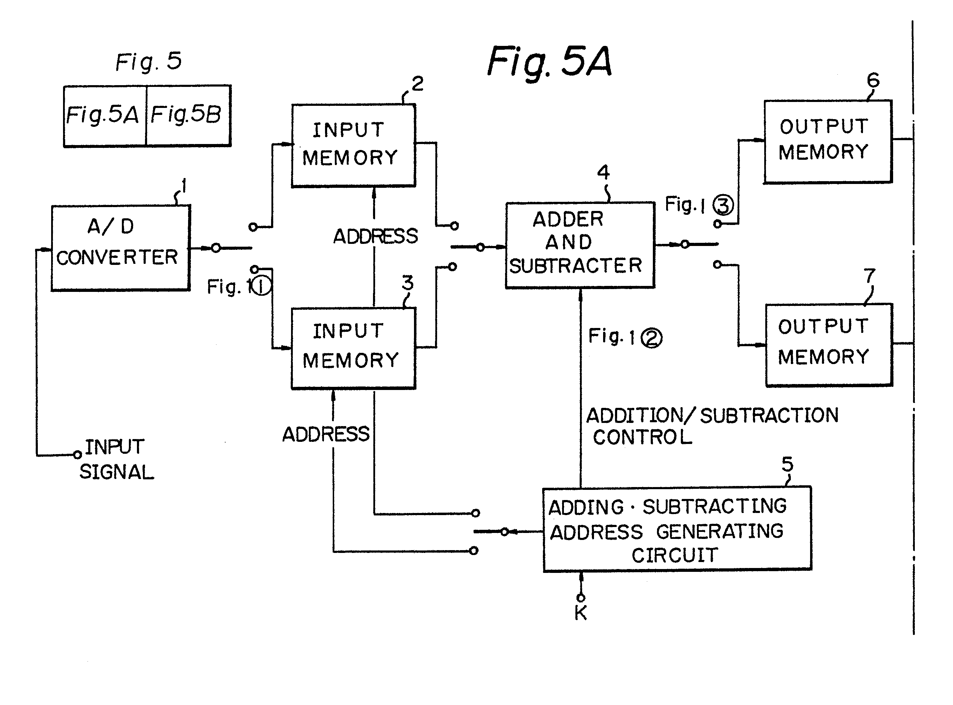

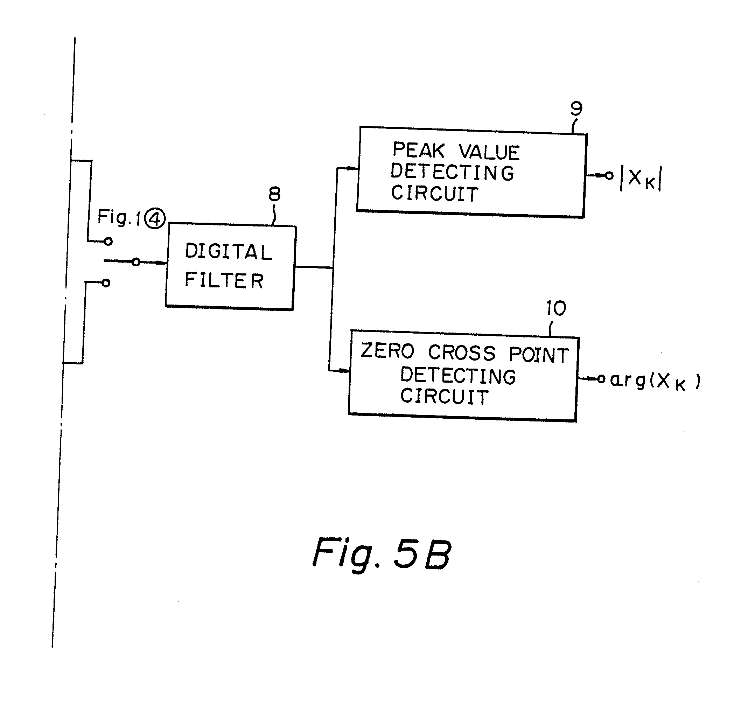

The construction of an embodiment of an apparatus according to the present invention is shown in Fig. 5. In Fig. 5, an input signal is converted by an analog-to-digital (A/D) converter 1 to a digital signal. This digital signal corresponds to Fig. 1-①, that is [x(0), x(1), ....., x(N-1)], and is written in one of two memories 2 and 3. The two memories are provided so that the input signal can be received smoothly when one memory is occupied by providing a signal for an adding and subtracting circuit 4. The two memories may each be alternately operated to read the input signal and to write a signal to the adding and subtracting circuit.

An adding/subtracting address generation circuit 5 generates the matrix $\begin{bmatrix} H_k \end{bmatrix}$ shown in Fig. 1-②, that is, expressed by equation (1). The adding and subtracting circuit 4 calculates the product

$$\begin{bmatrix} H_k \end{bmatrix} \begin{bmatrix} x(0), x(1), ....., x(N-1) \end{bmatrix}$$

by the addition and subtraction process (as mentioned above). The output of the circuit 4 corresponds to Fig. 1-③.

That is, the adding and subtracting circuit 4 first executes equation (2) on the $(N-1)$'th column for X in the input memory so as to calculate $W_k(N-1)$. Second,

based on this $W_k(N-1)$ and using the above-mentioned difference conversion matrix, the circuit 4 calculates the values all $\left[ W_k(0), W_k(1), \ldots\ldots, W_k(N-1) \right]$. By this, the convolution waveform of the input signal $x$ and the square wave shown in equation (2) can be obtained. In the calculating process, addition or subtraction is selected by an address generation circuit 5 shown in Fig. 5. The obtained waveform is successively transferred to an output memory 6 or 7. Two output memories are provided for a similar reason as with the two input memories, that is, to allow input/of the (writing) content of one output memory to a digital filter 8, while the other output memory may be occupied by (reading from) the adding and sutracting circuit. Each output memory may alternate between these two types of operation.

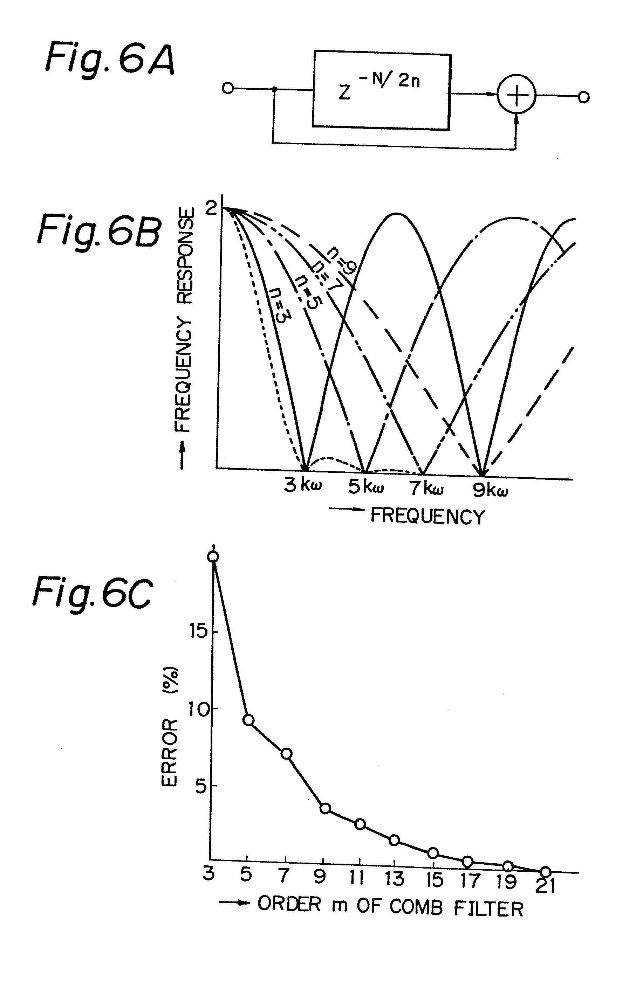

For the purpose of removing the 3rd, 5th, 7th, and higher odd number harmonics included in the obtained convoluted waveform, a filter formed by a cascading comb filter 8a shown in Fig. 6A is used. The characteristic of the comb filter is shown in Fig. 6B. In Fig. 6A, there are N/2n delayed samplings in the comb filter for removing n'th harmonics (n is 3 .or higher odd number). N/2 is not always an integer. When not an integer, N/2n is rounded off. There are an infinite number of odd number higher harmonics included in the convoluted waveform, however, in the present invention, the (of comb filters) cascaded comb filter is . limited to a finite number. The rounding off of N/2n and the finite number of comb filters results in some error in the DFT obtained by the present invention. The error with comb filters for removing an m'th higher harmonic (m is 3 or a higher odd number) is as shown in Fig. 6C when (m-1)/2 comb filters are used. As shown in Fig. 6C, when seven cascaded comb filters are used for removing the 3rd to the 15th higher harmonic, the error becomes lower than 1%.

In Fig. 5, the sine wave output from the comb filter 8 is, over the range of one period, input to a peak value detecting circuit 9 and a zero cross point detecting circuit 10 to obtain the amplitude and phase angle thereof. These are equal to $|X_k|$ and arg $|X_k|$ in the k'th DFT component $X_k$.

After a series of the above-mentioned operations is executed, all circuits are stopped and enter a reoperation standby mode.

For the purpose of removing the 3rd, 5th, 7th, and higher odd number harmonics included in the obtained convoluted waveform, a moving average filter can also be used as the digital filter besides/a comb filter. (instead of) With a moving average filter, the process can be carried out, using only adding and subtracting operations, by the operation of successively shifting a series of sampled values and averaging each determined number.

That is, when the moving average during the time is expressed as $U(\tau, t)$ and the same moving average is repeated n times, the following equation is obtained.

$$U_n(\tau, t) = \{\frac{\sqrt{2(1-\cos 2\pi f\tau)}}{2\pi f\tau}\}^n \sin(2\pi ft + n\phi) \qquad \ldots (7)$$

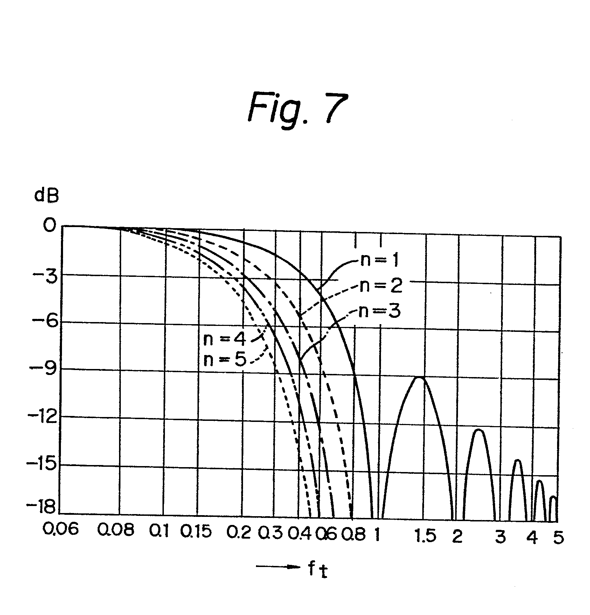

When equation (7) is calculated, the low pass characteristic as shown in Fig. 7 can be obtained. Therefore, by the combination of the convolution with the square wave, DFT can be obtained by just adding and subtracting operations.

When the above embodiment of the present invention is used, the DFT of the input signal can be obtained by only a few addition and subtraction operations.

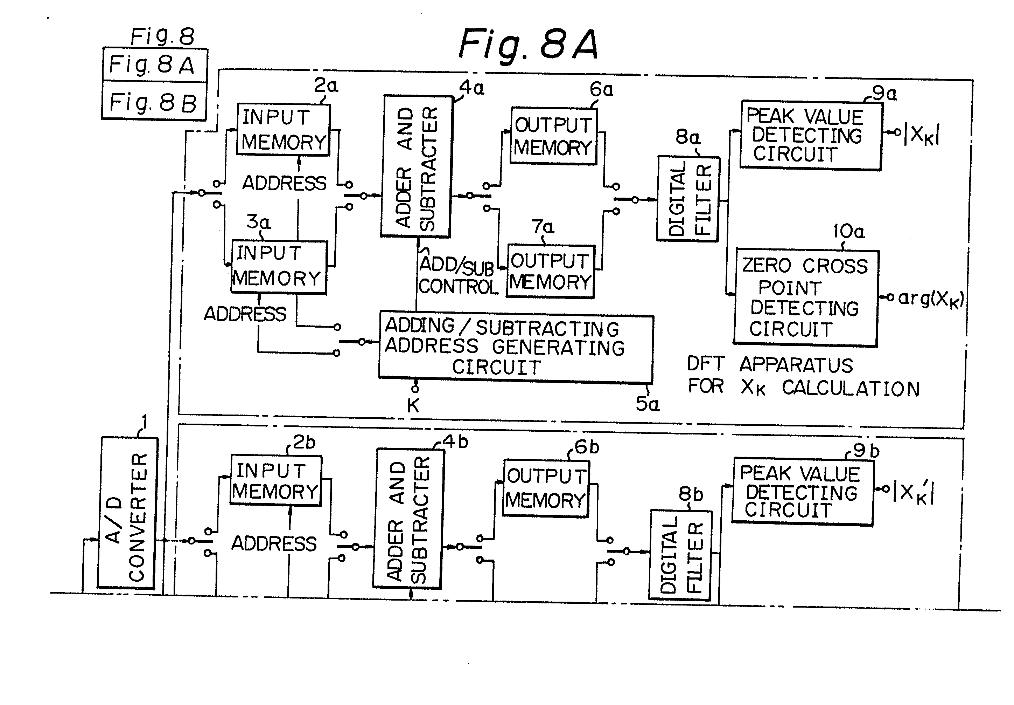

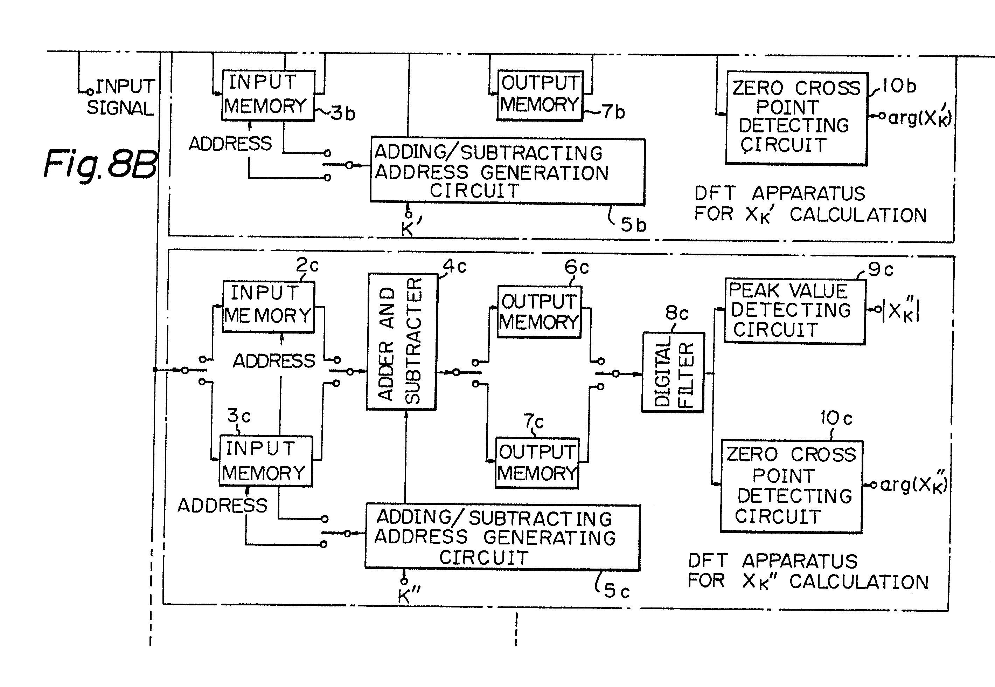

Figure 8 shows another embodiment of the present invention. The embodiment is different from Fig. 5 in that a plurality of portions corresponding to Fig. 5 with the exception of the A/D converter 1, are arranged in parallel. In Fig. 8, the same portions as Fig. 5 are given the same reference numerals with suffixes a, b, and c.

In Fig. 5, when a component $X_k$ of DFT is obtained

with respect to a/"k" and then another $X'_k$ with respect to another /"k'" is desired, k' is set in the adding and subtracting address generator circuit 5 so as to carry out another operation. However, because the construction of the embodiment shown in Fig. 5 is very simple, the DFT component with respect to a plurality of k/values can be calculated in parallel as shown in Fig. 8. In the embodiment shown in Fig. 8, sequential processing similar to Fig. 5 is possible and, usually, combined parallel and sequential processing is possible. In the embodiment shown in Fig. 8, when parallel calculations are carried out on a number P of k values, the processing time can be decreased by 1/P, compared with when the same number of k·/values are processed by the embodiment shown in Fig. 5.

According to the present invention, k'th components a· DFT ($0 \leq k \leq N-1$) can be obtained for an input signal [x(0), x(1), ....., x(N-1)] formed by N sample values with only 2·5 N adding and subtracting processes and a digital filter. Therefore, DFT can be carried out in real time by a very simple apparatus which uses no multiplier.

## CLAIMS

1. A discrete Fourier transformation method comprising the steps of:

effecting discrete transformation of a square wave and an input signal by a digital process;

supplying results of said discrete transformation to a digital filter; and

obtaining a discrete Fourier transformation component as an amplitude and a phase of a sine wave which is output from said digital filter.

2. A discrete Fourier transformation method according to claim 1, wherein said digital filter is a comb filter.

3. A discrete Fourier transformation method according to claim 1, wherein said digital filter is a moving average filter.

4. A discrete Fourier transformation apparatus comprising:

an A/D converter which converts an input analog signal to a digital signal $[x(0), x(1), \ldots\ldots, x(N-1)]$;

an input memory for storing a converted digital signal $[x(0), x(1), \ldots\ldots, x(N-1)]$ therein;

an adding and subtracting address generation circuit which generates a matrix $[H_k]$ of a square wave;

$$H_k = \left[ H|_0 \ , \ H|k\cdot, \ H|2k\cdot, \ H|3k\cdot, \ \ldots\ldots, \ H|(N-1)k\cdot \right]$$

wherein

$$H|_0 = \left[ h_0 \ , \ h_1 \ , \ \ldots\ldots h_{N/2-1} , h_{N/2} , h_{N/2+1} \ldots\ldots h_{N-1} \right]^T$$
$$= \left[ 1, 1, \ldots\ldots 1, 0, 0, \ldots\ldots, 0 \right]^T$$

and $H|j\cdot(k \leq j \leq (N-1)k)$ is obtained by successively shifting the elements in $H|0$ toward the right by $(j \bmod N)$, $H|_0$ and $H|j$ each becoming a row vector in $H_k$;

an adder and subtracter which is connected to an output of said input memory and to the adding and subtracting address generation circuit so as to calculate the product of said $H_k$ and said $[x(0), x(1), \ldots, x(N-1)]$;

an output memory for storing an output of said adder and subtracter;

a digital filter which is connected to an output of said output memory and removes third, fifth, seventh, and higher odd number harmonics included in the output of said output memory; and

a peak detecting circuit which is connected to an output of said digital filter and detects a peak value of the output of said digital filter.

5.      A discrete Fourier transformation apparatus according to claim 4, further comprising another input memory which is connected in parallel to said input memory, said input memory and said another input memory being operable alternately to store the output of said A/D converter and to provide an input of said adder and subtracter.

6.      A discrete Fourier transformation apparatus according to claim 4 or 5, further comprising another output memory which is connected in parallel to said output memory, said output memory and said another output memory being operable alternately to store the output of said adder and subtracter and to provide an input of said digital filter.

7.      A discrete Fourier transformation apparatus according to any of claims 4 to 6, further comprising a zero cross point detecting circuit which is connected to the output of said digital filter and detects a zero cross point of the output of said digital filter.

8.      A discrete Fourier transformation apparatus comprising:

an A/D converter which converts an input analog signal to a digital signal $[x(0), x(1), \ldots, x(N-1)]$, and a plurality of transformation circuits, each comprising:

a plurality of input memories for storing a converted digital signal $[x(0), x(1), .., x(N-1)]$ therein;

an adding and subtracting address generation circuit which generates a matrix $[H_k]$ representing a square wave, wherein

$$[H_k] = [H|_0, H|k^{\cdot}, H|2k^{\cdot}, \ldots H|(N-1)k^{\cdot}]$$

and $H|_0 = [h_0, h_1, \ldots h_{N/2-1}, h_{N/2}, h_{N/2+1}, \ldots h_{N-1}]^T$

and $H|j^{\cdot}$ $(k \le j \le (N-1)k)$ is obtained by successively shifting elements in $H|_0$ to the right by $(j \bmod N)$, $H|_0$ and $H|j$ each becoming a row vector in $H_k$;

an adder and subtracter which is connected to outputs of said pluralities of input memories and to the adding and subtracting address generation circuit so as to calculate a product of said $H_k$ and said $[x(0), x(1) \ldots, x(N-1)]$;

a plurality of output memories for storing an output of said adder and subtracter ;

a digital filter which is connected to outputs of said plurality of output memories and removes third, fifth, seventh, and higher odd-numbered harmonics in signals output from said plurality of output memories;

and a peak detecting circuit which is connected to an output of said digital filter and detects a peak value of the output of said digital filter.

9.          A discrete Fourier transformation apparatus for carrying out a method according to any of claims 1 to 3.

Fig. 1

① DFT OF INPUT WAVEFORM X(n) — SPECTRUM vs FREQ., $X_K$, $k\omega$

② DFT OF SQUARE WAVEFORM h(kwt) — SPECTRUM vs FREQ., $k\omega$, $3k\omega$, $5k\omega$, $7k\omega$

CONVOLUTION

③ DFT OF CONVOLUTED WAVEFORM — SPECTRUM vs FREQ., $X_K$, $k\omega$, $3k\omega$, $5k\omega$, $7k\omega$

ADJUSTMENT OF CONVOLUTION PERIOD
(PERIOD OF CONVOLUTION = $2\pi/w$)

④ DFT OF WAVEFORM AFTER PERIOD IS ADJUSTED — SPECTRUM vs FREQ., $X_K$, $\omega$, $3\omega$, $5\omega$, $7\omega$

0137730

# Fig. 2

AMPLITUDE $= |X_K|$

PHASE ANGLE $= \arg(X_K)$

Fig. 3

Fig. 4

Fig. 5

| Fig.5A | Fig.5B |

Fig. 5A

PEAK VALUE
DETECTING
CIRCUIT 9 ○— $|X_K|$

Fig.1④

DIGITAL
FILTER 8

ZERO CROSS POINT
DETECTING
CIRCUIT 10 ○— $\arg(X_K)$

*Fig. 5B*

*Fig. 6A*

$$Z^{-N/2n}$$

*Fig. 6B*

FREQUENCY RESPONSE

n=9
n=7
n=5
n=3

3 kω   5 kω   7 kω   9 kω

→ FREQUENCY

*Fig. 6C*

ERROR (%)

15

10

5

3  5  7  9  11  13  15  17  19  21

→ ORDER m OF COMB FILTER

0137730

## Fig. 7

Fig. 8
| Fig. 8 A |
| Fig. 8 B |

# Fig. 8A

INPUT MEMORY 2a

ADDRESS

INPUT MEMORY 3a

ADDRESS

ADDER AND SUBTRACTER 4a

ADD/SUB CONTROL

OUTPUT MEMORY 6a

OUTPUT MEMORY 7a

ADDING / SUBTRACTING ADDRESS GENERATING CIRCUIT 5a

K

DIGITAL FILTER 8a

PEAK VALUE DETECTING CIRCUIT 9a — $|X_K|$

ZERO CROSS POINT DETECTING CIRCUIT 10a — $\arg(X_K)$

DFT APPARATUS FOR $X_K$ CALCULATION

A/D CONVERTER 1

INPUT MEMORY 2b

ADDRESS

ADDER AND SUBTRACTER 4b

OUTPUT MEMORY 6b

DIGITAL FILTER 8b

PEAK VALUE DETECTING CIRCUIT 9b — $|X_K'|$

9/10

0137730

Fig. 8B

DFT APPARATUS FOR $X_K'$ CALCULATION

DFT APPARATUS FOR $X_K''$ CALCULATION

$\frac{10}{10}$

0137730